# EUROPEAN PATENT SPECIFICATION

(11) **EP 4 071 381 B1**
(45) Date of publication and mention of the grant of the patent: **27.11.2024**
(21) Application number: 19955346.2
(22) Date of filing: 04.12.2019
(51) Int. Cl.: F16F 15/134, F16F 15/139, F16F 15/14, F16F 15/315, F16F 15/123

(54) **DAMPER FOR VEHICLE, AND VEHICLE**
DÄMPFER FÜR FAHRZEUG UND FAHRZEUG
AMORTISSEUR POUR VÉHICULE, ET VÉHICULE

(43) Date of publication of application: 12.10.2022
(73) Proprietor: Schaeffler Technologies AG & Co. KG, 91074 Herzogenaurach (DE)
(72) Inventor: XIAO, Rongting, Kunshan, Jiangsu 201199 (CN)
(86) International application number: PCT/CN2019/122889
(87) International publication number: WO 2021/109015

(56) References cited:
- EP-A1- 3 150 881
- WO-A1-2019/058057
- CN-A- 1 213 051
- CN-A- 105 605 151
- CN-A- 110 030 322
- CN-A- 110 030 322
- DE-A1- 102017 114 872
- JP-A- 2001 304 341
- US-A1- 2003 085 097
- US-A1- 2008 110 719
- US-A1- 2014 087 889

## Description

### Technical Field

The present invention relates to a vibration damper for a vehicle and the vehicle including the vibration damper.

### Background

In the prior art, a dual mass flywheel is usually installed between an engine crankshaft of the vehicle and an input shaft of a transmission, and is used to transmit torque of the engine crankshaft to the input shaft of the transmission provided that torsional vibration of the engine crankshaft is effectively attenuated, thereby reducing the impact of the torsional vibration of the engine crankshaft on the transmission. In addition, a disc vibration damper with a single flywheel mass and two side plates formed by stamping has similar vibration damping effects to a dual mass flywheel, and has a simple structure and low costs compared with the dual mass flywheel. However, compared with the dual mass flywheel, this kind of disc vibration damper has higher torsional rigidity, which reduces the vibration damping effects of this kind of disc vibration damper.

WO 2019/058057 A1 discloses a vibration damper for a vehicle.

### Summary

The present invention has been made in view of the state of the prior art as described above. The object of the present invention is to provide a novel vibration damper for the vehicle, which is not only simple in structure and low in cost, but also can have excellent vibration damping effects compared with the existing dual mass flywheel.

To achieve the above object, the following technical schemes are adopted.

The present invention provides a vibration damper for a vehicle as follows, including:
a flywheel mass for transmission connection with an engine crankshaft of the vehicle;
a first hub flange fixed to the flywheel mass and formed with a first through-hole passing through in an axial direction of the vibration damper for the vehicle;
a second hub flange for transmission connection with an input shaft of a transmission of the vehicle and capable of rotating in a predetermined extent in a circumferential direction of the vibration damper for the vehicle relative to the first hub flange, wherein the second hub flange is formed with a second through-hole passing through in the axial direction, and the second through-hole and the first through-hole are staggered in the circumferential direction;
two side plates fixed to each other with the first hub flange and the second hub flange therebetween, wherein the two side plates are capable of rotating in a predetermined extent in the circumferential direction relative to the first hub flange and the second hub flange, and the two side plates form main damping spring mounting portions;
a plurality of main damping springs distributed along the circumferential direction and respectively accommodated in the corresponding main damping spring mounting portions, wherein a first main damping spring of the plurality of main damping springs is mounted in the first through-hole, and a second main damping spring of the plurality of main damping springs is mounted in the second through-hole, so that when the vibration damper is operated, a relative rotation angle of the first hub flange relative to the second hub flange is equal to the sum of a relative rotation angle of the first hub flange relative to the two side plates and a relative rotation angle of the two side plates relative to the second hub flange;
a hub core located radially inside of the second hub flange, wherein the second hub flange is capable of rotating in a predetermined extent in the circumferential direction relative to the hub core, and the second hub flange abuts against the hub core through rotation; and
a plurality of pre-damping springs distributed along the circumferential direction and located between the hub core and the second hub flange in the circumferential direction, such that during the rotation of the second hub flange relative to the hub core, the plurality of pre-damping springs are compressed to implement damping.

The present invention further provides a vibration damper for a vehicle as follows, including:
a flywheel mass for transmission connection with an engine crankshaft of the vehicle;
a first hub flange in transmission connection with the flywheel mass and formed with a first through-hole passing through in an axial direction of the vibration damper for the vehicle;
a second hub flange for transmission connection with an input shaft of a transmission of the vehicle and capable of rotating in a predetermined extent in a circumferential direction of the vibration damper for the vehicle relative to the first hub flange, wherein the second hub flange is formed with a second through-hole passing through in the axial direction, and the second through-hole and the first through-hole are staggered in the circumferential direction;
two side plates fixed to each other with the first hub flange and the second hub flange therebetween, wherein the two side plates are capable of rotating in a predetermined extent in the circumferential direction relative to the first hub flange and the second hub flange, and the two side plates form main damping spring mounting portions;
a plurality of main damping springs distributed along the circumferential direction and respectively accommodated in the corresponding main damping spring mounting portions, wherein a first main damping spring of the plurality of main damping springs is mounted in the first through-hole, and a second main damping spring of the plurality of main damping springs is mounted in the second through-hole, so that when the vibration damper is operated, a relative rotation angle of the first hub flange relative to the second hub flange is equal to the sum of a relative rotation angle of the first hub flange relative to the two side plates and a relative rotation angle of the two side plates relative to the second hub flange;
a third hub flange fixed to the flywheel mass and located radially inside of the first hub flange, wherein the third hub flange is capable of rotating in a predetermined extent in the circumferential direction relative to the first hub flange, and the third hub flange abuts against the first hub flange through rotation; and
a plurality of pre-damping springs distributed along the circumferential direction and located between the third hub flange and the first hub flange in the circumferential direction, such that during the rotation of the third hub flange relative to the first hub flange, the plurality of pre-damping springs are compressed to implement damping.

Preferably, a length of the first through-hole is roughly equal to a length of the first main damping spring, and a length of the second through-hole is roughly equal to a length of the second main damping spring.

More preferably, the first hub flange further is formed with a third through-hole corresponding to the second through-hole and passing through the first hub flange in the axial direction, and the length of the third through-hole is greater than the length of the second main damping spring and the length of the second through-hole; and/or
the second hub flange further is formed with a fourth through-hole corresponding to the first through-hole and passing through the second hub flange in the axial direction, and the length of the fourth through-hole is greater than the length of the first main damping spring and the length of the first through-hole.

More preferably, the vibration damper for the vehicle further includes a centrifugal pendulum unit disposed on the first hub flange, and the centrifugal pendulum unit is located radially outside or radially inside of the first through-hole and the third through-hole; and/or
the vibration damper for the vehicle further includes a centrifugal pendulum unit disposed on the second hub flange, and the centrifugal pendulum unit is located radially outside or radially inside of the second through-hole and the fourth through-hole.

More preferably, the first hub flange includes a cutaway area avoiding the second main damping spring; and/or the second hub flange includes a cutaway area avoiding the first main damping spring.

More preferably, each the main damping spring mounting portion includes windows corresponding to the main damping springs and passing through the side plates in the axial direction, lengths of the windows are roughly equal to lengths of the corresponding main damping springs, such that locations of the corresponding main damping springs can be defined by peripheries of the windows, and
a plurality of the main damping spring mounting portions are evenly distributed or unevenly distributed in the circumferential direction.

More preferably, the two side plates include a first side plate located on one axial side of the first hub flange and a second side plate located on the other axial side of the second hub flange, and
the vibration damper for the vehicle further includes at least one side friction disc disposed between the second side plate and the second hub flange with the hub core, and at least one central friction disc disposed between the first hub flange and the second hub flange with the hub core, wherein the at least one side friction disc and the at least one central friction disc limit the pre-damping springs in the axial direction.

More preferably, the two side plates include a first side plate located on one axial side of the first hub flange and a second side plate located on the other axial side of the second hub flange, and
the vibration damper for the vehicle further includes at least one side friction disc disposed between the first side plate and the first hub flange with the third hub flange, and at least one central friction disc disposed between the first hub flange with the third hub flange and the second hub flange, wherein the at least one side friction disc and the at least one central friction disc limit the pre-damping springs in the axial direction.

The present invention further provides a vehicle as follows, including a vibration damper for the vehicle according to any one of the foregoing technical schemes.

Through the foregoing technical scheme, the present invention provides a novel vibration damper for the vehicle and the vehicle including the vibration damper. The vibration damper for the vehicle includes not only a flywheel mass, and two hub flanges (a first hub flange and a second hub flange) and a plurality of main damping springs between two side plates, but also an additional hub flange (a third hub flange) or hub core and a plurality of pre-damping springs.

In the vibration damper for the vehicle, a first main damping spring of the plurality of main damping springs only corresponds to the first hub flange, and a second main damping spring only corresponds to the second hub flange, such that the first main damping spring and the second main damping spring is configured in series during torque transmitting by the vibration damper, and thus a total relative rotation angle of the two hub flanges is equal to the sum of a relative rotation angle of the first hub flange relative to the side plates and a relative rotation angle of the side plates relative to the second hub flange (namely the sum of compression angles of the two main damping springs in series connection). In addition, pre-damping springs are disposed between the first hub flange and the third hub flange located radially inside thereof or between the second hub flange and a hub core located radially inside thereof.

In this way, compared with an existing dual mass flywheel, this novel vibration damper for the vehicle not only has a simple structure and low costs, but also can effectively reduce torsional rigidity, thus having excellent vibration damping effects not only when an engine operates normally but also when the engine rotates at an idle speed.

### Brief Description of the Drawings

FIG. 1a is a schematic front view of a vibration damper for the vehicle according to a first embodiment of the present invention, wherein a partial structure is omitted in order to clearly show its internal structure; FIG. 1b is an exploded schematic view of the vibration damper for the vehicle in FIG. 1a; and FIG. 1c is a schematic partial cross-sectional view of the vibration damper for the vehicle in FIG. 1a.
FIG. 2 is a schematic partial cross-sectional view of a vibration damper for the vehicle according to a second embodiment of the present invention.

### Description of Reference Numerals

1: Flywheel mass; 11: radial portion of the flywheel mass; 12: axial portion of the flywheel mass; 13: outer gear ring;
21: first hub flange; 211: annular body; 212: lug; 21h: first through-hole; 22: second hub flange; 22h1: second through-hole; 22h2: fourth through-hole;
31: first side plate; 31h: first window; 32: second side plate; 32h: second window;
4: main damping spring; 41: first main damping spring; 42: second main damping spring;
51: friction sleeve; 511: radial portion of the friction sleeve; 512: axial portion of the friction sleeve; 52: first side friction disc; 53: second side friction disc; 54: central friction disc; 55: third side friction disc; 56: fourth side friction disc; 57: fifth side friction disc;
61: first diaphragm spring; 62: second diaphragm spring; 63: third diaphragm spring; 64: fourth diaphragm spring; 65: fifth diaphragm spring; 66: sixth diaphragm spring;
7: centrifugal pendulum unit;
81: hub core; 82: third hub flange;
9: pre-damping spring;
CS: engine crankshaft;
R: radial direction; A: axial direction; C: circumferential direction; O: central axis.

### Detailed Description

Exemplary implementations of the present invention will be described below with reference to the drawings. It should be understood that these specific descriptions are only used to teach those skilled in the art how to implement the present invention, and are not intended to be exhaustive of all possible variations of the present invention, nor to limit the scope of the present invention.

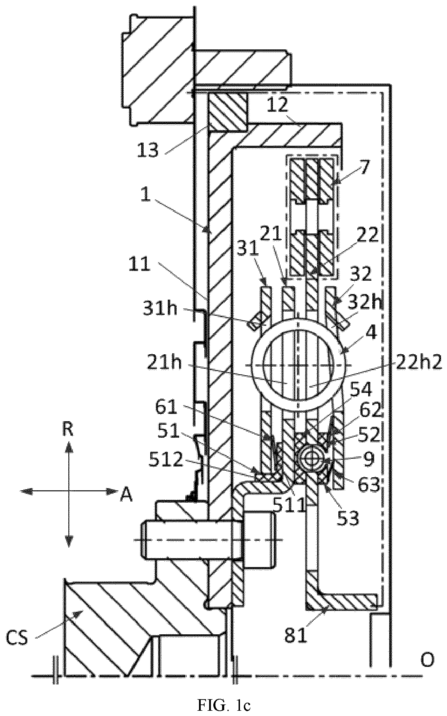

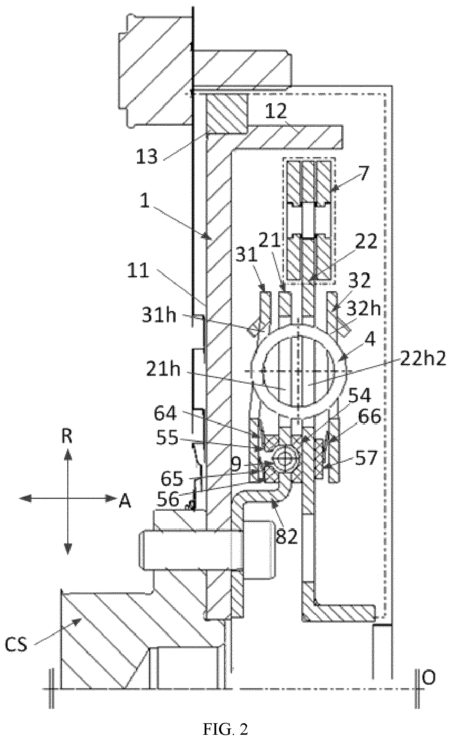

In the present invention, unless otherwise specified, axial direction, radial direction and circumferential direction refer to the axial direction, radial direction and circumferential direction of the vibration damper for the vehicle, respectively. One axial side refers to the left side in FIG. 1c and FIG. 2, i.e., the side where an engine is located, and the other axial side refers to the right side in FIG. 1c and FIG. 2, i.e., the side where a transmission is located. A radial outer side refers to the side away from a central axis O in the radial direction (upper side in FIG. 1c and FIG. 2), and a radial inner side refers to the side close to the central axis O in the radial direction (lower side in FIG. 1c and FIG. 2).

The structure of the vibration damper for the vehicle according to the first embodiment of the present invention will be described below with reference to the accompanying drawings of the specification.

### (Structure of the vibration damper for the vehicle according to the first embodiment of the present invention)

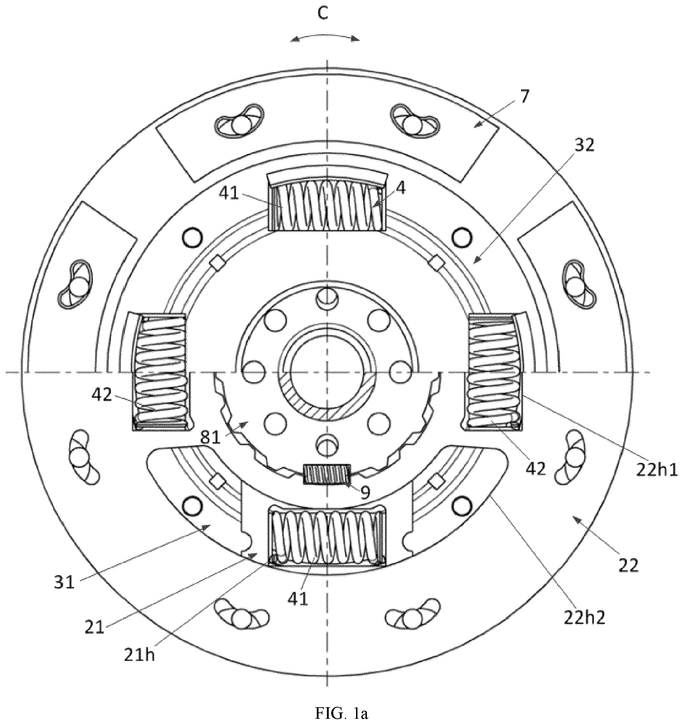

As shown in FIG. 1a to FIG. 1c, the vibration damper for the vehicle according to the first embodiment of the present invention has a disc shape as a whole and includes a flywheel mass 1, two hub flanges (a first hub flange 21 and a second hub flange 22), two side plates (a first side plate 31 and a second side plate 32), a plurality of (four in this embodiment) main damping springs 4, a damping assembly (a friction sleeve 51, a first side friction disc 52, a second side friction disc 53 and a central friction disc 54), diaphragm springs (a first diaphragm spring 61, a second diaphragm spring 62 and a third diaphragm spring 63), a centrifugal pendulum unit 7, a hub core 81 and pre-damping springs 9, which are assembled together. Specifically, in this embodiment, the flywheel mass 1 has a disc shape and is used to be fixedly connected to an engine crankshaft CS of the vehicle, and the flywheel mass 1 includes a radial portion 11 of the flywheel mass and an axial portion 12 of the flywheel mass which are formed as one body. The radial portion 11 of the flywheel mass extends along a radial direction R, and the axial portion 12 of the flywheel mass extends by a predetermined length from a radial outer side end of the radial portion 11 of the flywheel mass to the other axial side along an axial direction A. The flywheel mass 1 further includes an outer gear ring 13 disposed radially outside of the axial portion 12 of the flywheel mass and mounted on the axial portion 12 of the flywheel mass, and a motor of the vehicle can start the engine through the outer gear ring 13. Further, in this embodiment, two hub flanges 21, 22 are both located on other axial side of the radial portion 11 of the flywheel mass and located radially inside of the axial portion of the flywheel, and include a first hub flange 21 and a second hub flange 22 spaced apart from each other in the axial direction A.

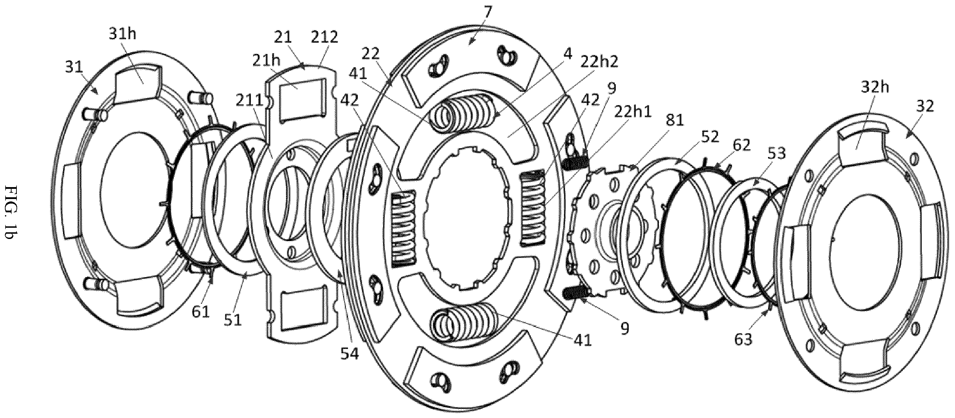

As shown in FIG. 1b, the first hub flange 21 includes an annular body 211 and two lugs 212 disposed on the annular body 211 and protruding towards the radial outer side. The two lugs 212 protrude in opposite directions and a cutaway area is formed between the two lugs 212. The annular body 211 is fixed to the flywheel mass 1 via a mounting member such that the first hub flange 21 together with the flywheel mass 1 can be driven to rotate by the engine crankshaft CS. The two lugs 212 are symmetrically disposed with respect to the central axis O, and each lug 212 is formed with a first through-hole 21h passing through the first hub flange 21 in the axial direction A. The length of the first through-hole 21h is roughly equal to the length of a first main damping spring 41 of the main damping spring 4, and two first main damping springs 41 of the four main damping springs 4 are respectively mounted in the two first through-holes 21h.

As shown in FIG. 1b, the second hub flange 22 has a disc shape as a whole and is used to be in transmission connection with an input shaft of a transmission of the vehicle via a hub core 81 to be capable of transmitting torque from an engine crankshaft CS to the input shaft of the transmission. The second hub flange 22 can rotate in a predetermined extent in the circumferential direction C relative to the first hub flange 21. Similar to the first through-hole 21h of the first hub flange 21, the second hub flange 22 is formed with two second through-holes 22h1 passing through the second hub flange 22 in the axial direction A, and lengths of the second through-holes 22h1 are both roughly equal to the length of a second main damping spring 42 of the main damping springs 4. In an initial installation state of the vibration damper for the vehicle, the second through-holes 22h1 and the first through-holes 21h are completely staggered in the circumferential direction C and evenly distributed in the circumferential direction C (see FIG. 1a), and two second main damping springs 42 of the four main damping springs 4 except the first main damping spring 41 are mounted in the two second through-holes 22h1, respectively. It should be noted that, in the initial installation state, the second main damping spring 42 and the second through-hole 22h1 correspond to the cutaway area of the first hub flange 21.

In addition, the second hub flange 22 is further formed with two fourth through-holes 22h2 corresponding to the first through-holes 21h and passing through the second hub flange 22 in the axial direction A, wherein each the fourth through-hole 22h2 has an arc shape extending along the circumferential direction C, and the length of the fourth through-hole 22h2 is much greater than the length of the main damping spring 4. In this way, during the process that the first hub flange 21 drives the two side plates 31, 32 to rotate via the first main damping spring 41, the first main damping spring 41 is compressed, such that the first hub flange 21 can rotate relative to the two side plates 31, 32, realizing the relative-rotation. In this process, the fourth through-hole 22h2 can ensure that the second hub flange 22 does neither affect the compression of the first main damping spring 41 nor receive torque via the first main damping spring 41.

Further, in this embodiment, the two side plates 31, 32 are fixed to each other with the first hub flange 21 and the second hub flange 22 therebetween, such that the two side plates 31, 32 can rotate together. The two side plates 31, 32 as a whole can rotate in a predetermined extent in the circumferential direction C relative to the first hub flange 21 and the second hub flange 22, and the two side plates 31, 32 form main damping spring mounting portions, to define the locations of the main damping springs. In this embodiment, a plurality of main damping spring mounting portions are evenly distributed in the circumferential direction C.

More specifically, the two side plates 31, 32 include a first side plate 31 located on one axial side and a second side plate 32 located on the other axial side. The first side plate 31 includes four first windows 31h passing through the first side plate 31 in the axial direction A and corresponding to each the main damping spring 4, and the second side plate 32 includes four second windows 32h passing through the second side plate 32 in the axial direction A and corresponding to each the main damping spring 4. The length of each the first window 31h and the length of each the second window 32h are roughly equal to the length of the main damping spring 4, such that the location of the corresponding main damping spring 4 can be defined by the periphery of the first window 31h and the periphery of the second window 32h.

In this way, the locations of the first main damping spring 41 in the axial direction A, the radial direction R and the circumferential direction C can be defined by the cooperation of the main damping spring mounting portion with the first through-hole 21h, and the locations of the second main damping spring 42 in the axial direction A, the radial direction R and the circumferential direction C can be defined by the cooperation of the main damping spring mounting portion with the second through-hole 22h1.

Further, in this embodiment, all the main damping springs 4 may be linear cylindrical helical springs with the same shape and size. The four main damping springs 4 are evenly distributed along the circumferential direction C and are all accommodated in the corresponding main damping spring mounting portions, and two first main damping springs 41 spaced apart from each other by 180 degrees in the circumferential direction C are mounted in the first through-hole 21h, and two second main damping springs 42 spaced apart from each other by 180 degrees in the circumferential direction C are mounted in the second through-hole 22h1. The first main damping springs 41 and the second main damping springs 42 are alternately arranged in the circumferential direction C.

Through adopting the foregoing technical scheme, when the torque from the engine crankshaft CS is transmitted in the following order: the flywheel mass 1 and the first hub flange 21 → the first main damping spring 41 → the side plates 31, 32 → the second main damping spring 42 → the second hub flange 22, the first main damping spring 41 and the second main damping spring 42 are configured in series during the foregoing torque transmitting process, and thus a total relative rotation angle of the two hub flanges 21, 22 is equal to the sum of a relative rotation angle of the first hub flange 21 relative to the side plates 31, 32 and a relative rotation angle of the side plates 31, 32 relative to the second hub flange 22 (namely the sum of compression angles of the two main damping springs 41, 42 in series connection). In this way, the torsional rigidity of the vibration damper for the vehicle can be further reduced, thus improving the damping effect.

Further, in this embodiment, as shown in FIG. 1c, a damping assembly includes a friction sleeve 51 disposed between the first side plate 31 and the first hub flange 21, a first side friction disc 52 disposed between the second side plate 32 and the second hub flange 22, a second side friction disc 53 disposed between the second side plate 32 and the hub core 81, and a central friction disc 54 disposed between the first hub flange 21 and the second hub flange 22 with the hub core 81. An outer peripheral portion of the first diaphragm spring 61 abuts against the first side plate 31 and an inner peripheral portion thereof abuts against the friction sleeve 51 (a radial portion 511 of the friction sleeve). An outer peripheral portion of the second diaphragm spring 62 abuts against the second side plate 32 and an inner peripheral portion thereof abuts against the first side friction disc 52. An outer peripheral portion of the third diaphragm spring 63 abuts against the second side plate 32 and an inner peripheral portion thereof abuts against the second side friction disc 53.

The friction sleeve 51 has an annular shape as a whole and includes a radial portion 511 of the friction sleeve extending along the radial direction R and an axial portion 512 of the friction sleeve extending from a radial inner side end of the radial portion 511 of the friction sleeve toward one axial side. The radial portion 511 of the friction sleeve is pressed against the first hub flange 21 from one axial side via the first diaphragm spring 61. The axial portion 512 of the friction sleeve is disposed on a step portion formed by the annular body 211 of the first hub flange 21 from the radial outer side, and the first side plate 31 is disposed on the axial portion 512 of the friction sleeve from the radial outer side, such that the axial portion 512 of the friction sleeve is disposed between the first side plate 31 and the first hub flange 21 in the radial direction R.

The first side friction disc 52 has an annular shape as a whole and extends along the radial direction R. The first side friction disc 52 is pressed against the second hub flange 22 from the other axial side via the second diaphragm spring 62.

The second side friction disc 53 has an annular shape as a whole and extends along the radial direction R. The second side friction disc 53 is pressed against the hub core 81 from the other axial side via the third diaphragm spring 63.

The central friction disc 54 has an annular shape as a whole and extends along the radial direction R. The central friction disc 54 is sandwiched between the first hub flange 21 with the second hub flange 22 and the hub core 81 and abuts against the first hub flange 21, the second hub flange 22 and the hub core 81.

In this way, through the cooperation of the first diaphragm spring 61, the second diaphragm spring 62 and the third diaphragm spring 63 with the friction sleeve 51, the first side friction disc 52, the second side friction disc 53 and the central friction disc 54, the axial locations between the two side plates 31, 32, the two hub flanges 21, 22 and the hub core 81 can be ensured, and a damping effect can further be provided when they rotate relatively.

Further, in this embodiment, a plurality of centrifugal pendulum units 7 are disposed radially outside of the second hub flange 22, and the centrifugal pendulum units 7 are located radially outside of both the second through-hole 22h1 and the fourth through-hole 22h2. These centrifugal pendulum units 7 can further attenuate the torsional vibration from the engine crankshaft CS.

Further, in this embodiment, the hub core 81 is formed with an external spline, through which the hub core 81 can be in spline transmission connection with an internal spline of the second hub flange 22. The hub core 81 is also in transmission connection with the input shaft of the transmission through, for example, the internal spline. In this way, the second hub flange 22 can be in transmission connection with the input shaft of the transmission via the hub core 81. In addition, in the initial state shown in FIG. 1a (at this time, the pre-damping spring 9 is not compressed and the external spline of the hub core 81 is not meshed with the internal spline of the second hub flange 22), the second hub flange 22 can rotate in a predetermined extent relative to the hub core 81 in the circumferential direction C, such that the pre-damping spring 9 is compressed to play a damping function during the relative rotation.

Further, in this embodiment, two pre-damping springs 9 are linear cylindrical helical springs with the same shape and size. The two pre-damping springs 9 are mounted in a pre-damping spring mounting portion formed by a concave portion of the second hub flange 22 and a concave portion of the hub core 81, such that the pre-damping springs 9 are compressed during the rotation of the second hub flange 22 in the circumferential direction C relative to the hub core 81. When the internal spline of the second hub flange 22 is meshed with the external spline of the hub core 81, the compression amplitude of the pre-damping spring 9 reaches the maximum.

When the pre-damping spring 9 is mounted in the pre-damping spring mounting portion, the pre-damping spring 9 is limited by the second hub flange 22 and the hub core 81 in the circumferential direction C and the radial direction R, and is limited by the first side friction disc 52, the second side friction disc 53 and the central friction disc 54 in the axial direction A. In order to avoid interference between the first side friction disc 52, the second side friction disc 53 and the central friction disc 54 with the pre-damping spring 9, the first side friction disc 52, the second side friction disc 53 and the central friction disc 54 may all formed with concave portions corresponding to the outline of the pre-damping spring 9 (see FIG. 1c).

In addition to the vibration damper for the vehicle with the foregoing structure, the present invention also provides a vehicle including the vibration damper with the foregoing structure. In the vehicle, a flywheel mass 1 and a first hub flange 21 of the vibration damper for the vehicle are fixedly connected to an engine crankshaft CS of the vehicle, and a second hub flange 22 of the vibration damper for the vehicle is in transmission connection with an input shaft of a transmission of the vehicle via a hub core 81. The foregoing transmission may be various types of transmissions such as a dual clutch transmission and a manual transmission. The specific structure of the vibration damper for the vehicle according to the first embodiment of the present invention has been described above, and the structure of the vibration damper for the vehicle according to the second embodiment of the present invention will be described below.

### (Structure of the vibration damper for the vehicle according to the second embodiment of the present invention)

The basic structure of the vibration damper for the vehicle according to the second embodiment of the present invention is roughly the same as the basic structure of the vibration damper for the vehicle according to the first embodiment of the present invention, and the differences between them will be mainly described below.

As shown in FIG. 2, in this embodiment, the hub core 81 is omitted, and the second hub flange 22 is directly in transmission connection with the input shaft of the transmission.

Further, as shown in FIG. 2, a third hub flange 82 is disposed radially inside of the first hub flange 21. The third hub flange 82 is configured to be fixed with the flywheel mass 1 and the engine crankshaft CS. The third hub flange 82 is formed with an external spline, through which the third hub flange 82 can be in spline transmission connection with an internal spline of the first hub flange 21. In this way, the first hub flange 21 can be in transmission connection with the engine crankshaft CS via the third hub flange 82. Two pre-damping springs 9 are mounted in a pre-damping spring mounting portion formed by a concave portion of the first hub flange 21 and a concave portion of the third hub flange 82.

Further, as shown in FIG. 2, different from that of the first embodiment, a damping assembly includes a third side friction disc 55 disposed between the first side plate 31 and the first hub flange 21, a fourth side friction disc 56 disposed between the first side plate 31 and the third hub flange 82, a fifth side friction disc 57 disposed between the second side plate 32 and the second hub flange 22, and a central friction disc 54 disposed between the first hub flange 21 and the third hub flange 82 with the second hub flange 22. An outer peripheral portion of the fourth diaphragm spring 64 abuts against the first side plate 31 and an inner peripheral portion thereof abuts against the third side friction disc 55. An outer peripheral portion of the fifth diaphragm spring 65 abuts against the first side plate 31 and an inner peripheral portion thereof abuts against the fourth side friction disc 56. An outer peripheral portion of the sixth diaphragm spring 66 abuts against the second side plate 32 and an inner peripheral portion thereof abuts against the fifth side friction disc 57.

The third side friction disc 55 has an annular shape as a whole and extends along the radial direction R. The third side friction disc 55 is pressed against the first hub flange 21 from one axial side via the fourth diaphragm spring 64.

The fourth side friction disc 56 has an annular shape as a whole and extends along the radial direction R. The fourth side friction disc 56 is pressed against the third hub flange 82 from one axial side via the fifth diaphragm spring 65.

The fifth side friction disc 57 has an annular shape as a whole and extends along the radial direction R. The fifth side friction disc 57 is pressed against the second hub flange 22 from the other axial side via the sixth diaphragm spring 66.

The central friction disc 54 has an annular shape as a whole and extends along the radial direction R. The central friction disc 54 is sandwiched between the first hub flange 21 and the third hub flange 82 with the second hub flange 22 and abuts against the first hub flange 21, the third hub flange 82 and the second hub flange 22.

In this way, through the cooperation of the fourth diaphragm spring 64, the fifth diaphragm spring 65 and the sixth diaphragm spring 66 with the third side friction disc 55, the fourth side friction disc 56, the fifth side friction disc 57 and the central friction disc 54, the axial locations between the two side plates 31, 32 and the three hub flanges 21, 22, 82 can be ensured, and a damping effect can further be provided when they produce relative rotation.

Moreover, when the pre-damping spring 9 is mounted in the pre-damping spring mounting portion, the pre-damping spring 9 is limited by the first hub flange 21 and the third hub flange 82 in the circumferential direction C and the radial direction R, and is limited by the third side friction disc 55, the fourth side friction disc 56 and the central friction disc 54 in the axial direction A. In order to avoid interference between the third side friction disc 55, the fourth side friction disc 56 and the central friction disc 54 with the pre-damping spring 9, the third side friction disc 55, the fourth side friction disc 56 and the central friction disc 54 may all be formed with concave portions corresponding to the outline of the pre-damping spring 9 (see FIG. 2).

In addition to the vibration damper for the vehicle with the foregoing structure, the present invention also provides a vehicle including the vibration damper with the foregoing structure. In the vehicle, a flywheel mass 1 and a third hub flange 82 of the vibration damper for the vehicle are fixedly connected to an engine crankshaft CS of the vehicle, and a second hub flange 22 of the vibration damper for the vehicle is directly in transmission connection with an input shaft of a transmission of the vehicle. The foregoing transmission may be various types of transmissions such as a dual clutch transmission and a manual transmission.

It should be understood that the foregoing embodiments are only exemplary and are not intended to limit the present invention. Those skilled in the art can make various modifications and changes to the foregoing embodiments under the teaching of the present invention without departing from the scope of the present invention.
(i) Although it has been described in the foregoing specific embodiments that the first hub flange 21 forms the first through-hole 21h and the second hub flange 22 forms the second through-hole 22h1 and the fourth through-hole 22h2, the present invention is not limited thereto. When the first hub flange 21 is disc-shaped as a whole, the first hub flange 21 may be formed with a third through-hole corresponding to the second through-hole 22h1 and passing through the first hub flange 21 in the axial direction A, similarly to the fourth through-hole 22h2 formed in the second hub flange 22, and the length of the third through-hole is greater than the length of the main damping spring 4.
(ii) Although it has been described in the foregoing specific embodiments that the centrifugal pendulum units 7 are disposed in the second hub flange 22 and located radially outside of both the second through-hole 22h1 and the fourth through-hole 22h2, the present invention is not limited thereto. The centrifugal pendulum units 7 disposed in the second hub flange 22 may also be located radially inside of both the second through-hole 22h1 and the fourth through-hole 22h2. In addition, when the first hub flange 21 is disc-shaped as a whole, the vibration damper for the vehicle may include centrifugal pendulum units disposed in the first hub flange 21, and the centrifugal pendulum units may be located radially outside or radially inside of both the first through-hole 21h and the third through-hole.
(iii) Although it has been described in the foregoing specific embodiments that the number of main damping springs 4 is four and the number of pre-damping springs 9 is two, the present invention is not limited thereto. There may be six or another number of main damping springs 4, and there may be three or another number of pre-damping springs 9. The main damping springs 4 and the pre-damping springs 9 may be linear helical springs as described above, or may be arc-shaped helical springs.

When the main damping springs 4 and the pre-damping springs 9 are linear helical springs, preferably, each the main damping spring 4 and each the pre-damping spring 9 are accommodated in the damping spring mounting portion as described above in such a manner that the length direction thereof coincides with the direction of a tangent of the circumferential direction C of the vibration damper. When the main damping springs 4 and the pre-damping springs 9 are arc-shaped helical springs, preferably, each the main damping spring 4 and each the pre-damping spring 9 are accommodated in the damping spring mounting portion as described above in such a manner that the length direction thereof coincides with the circumferential direction C of the vibration damper.

Further, the first main damping spring 41 and the second main damping spring 42 may be different in type, size and spring rigidity.
(iv) Although not explicitly explained in the foregoing specific embodiments, the two side plates 31, 32 can be fixed to each other by a plurality of fixing pins passing through the fourth through-holes 22h2, and the locations of these fixing pins can be set as required as long as they do not interfere with the operation of the hub flanges 21, 22 and the main damping spring 4. Furthermore, these four fixing pins can also serve as limiting portions for defining the rotational limit location of the first hub flange 21 relative to the two side plates 31, 32 in the circumferential direction C.
(v) Although it has been described in the foregoing specific embodiments that a plurality of main damping spring mounting portions are evenly distributed in the circumferential direction C, the present invention is not limited thereto, and a plurality of main damping spring mounting portions may be unevenly distributed in the circumferential direction C.

Taking the case where the vibration damper for the vehicle according to the present invention has four main damping spring mounting portions as an example, a pair of first main damping spring mounting portions corresponding to the first through-holes 21h of the first hub flange 21 is arranged at an interval at a central angle of 180 degrees in the circumferential direction C, and a pair of second main damping spring mounting portions corresponding to the second through-holes 22h1 of the second hub flange 22 is arranged at an interval at a central angle of 180 degrees in the circumferential direction C. The first main damping spring mounting portions and the second main damping spring mounting portions are alternately arranged in the circumferential direction C. However, the first main damping spring and two adjacent second main damping springs are at intervals at different central angles in the circumferential direction C, and the layout of all a plurality of the main damping spring mounting portions is in central symmetry. Accordingly, the first through-holes 21h and the second through-holes 22h1 are also unevenly distributed in the circumferential direction C when the vibration damper for the vehicle is in the initial installation state.

In this way, when the vibration damper for the vehicle according to the present invention operates, the relative rotation angles of the first hub flange 21 relative to the second hub flange 22 toward both sides in the circumferential direction are different, that is, the compression angles of the main damping springs 4 connected in series are different during the relative rotation of the first hub flange 21 relative to the second hub flange 22 toward both sides in the circumferential direction. Therefore, the vibration damping effect of the vibration damper for the vehicle according to the present invention can be coordinated when operating toward a driving side and a towing side, such that, for example, it is possible to focus more on the vibration damping of the vibration damper for the vehicle toward the driving side.

## Claims

1. A vibration damper for a vehicle, comprising:
a flywheel mass (1) for transmission connection with an engine crankshaft (CS) of the vehicle; a first hub flange (21) fixed to the flywheel mass (1) and formed with a first through-hole (21h) passing through in an axial direction (A) of the vibration damper for the vehicle;
a second hub flange (22) for transmission connection with an input shaft of a transmission of the vehicle and capable of rotating in a predetermined extent in a circumferential direction (C) of the vibration damper for the vehicle relative to the first hub flange (21), wherein the second hub flange (22) is formed with a second through-hole (22h1) passing through in the axial direction (A), and the second through-hole (22h1) and the first through-hole (21h) are staggered in the circumferential direction (C);
two side plates (31, 32) fixed to each other with the first hub flange (21) and the second hub flange (22) therebetween, wherein the two side plates (31, 32) are capable of rotating in a predetermined extent in the circumferential direction (C) relative to the first hub flange (21) and the second hub flange (22), and the two side plates (31, 32) form main damping spring mounting portions;
a plurality of main damping springs (4) distributed along the circumferential direction (C) and respectively accommodated in the corresponding main damping spring mounting portions, wherein a first main damping spring (41) of the plurality of main damping springs (4) is mounted in the first through-hole (21h), and a second main damping spring (42) of the plurality of main damping springs (4) is mounted in the second through-hole (22h1), so that when the vibration damper is operated, a relative rotation angle of the first hub flange (21) relative to the second hub flange (22) is equal to the sum of a relative rotation angle of the first hub flange (21) relative to the two side plates (31, 32) and a relative rotation angle of the two side plates (31, 32) relative to the second hub flange (22);
a hub core (81) located radially inside of the second hub flange (22), wherein the second hub flange (22) is capable of rotating in a predetermined extent in the circumferential direction (C) relative to the hub core (81), and the second hub flange (22) abuts against the hub core (81) through rotation; and
a plurality of pre-damping springs (9) distributed along the circumferential direction (C) and located between the hub core (81) and the second hub flange (22) in the circumferential direction (C), such that during the rotation of the second hub flange (22) relative to the hub core (81), the plurality of pre-damping springs (9) are compressed to implement damping.

2. A vibration damper for a vehicle, comprising:
a flywheel mass (1) for transmission connection with an engine crankshaft (CS) of the vehicle;
a first hub flange (21) in transmission connection with the flywheel mass (1) and formed with a first through-hole (21h) passing through in an axial direction (A) of the vibration damper for the vehicle;
a second hub flange (22) for transmission connection with an input shaft of a transmission of the vehicle and capable of rotating in a predetermined extent in a circumferential direction (C) of the vibration damper for the vehicle relative to the first hub flange (21), wherein the second hub flange (22) is formed with a second through-hole (22h1) passing through in the axial direction (A), and the second through-hole (22h1) and the first through-hole (21h) are staggered in the circumferential direction (C);
two side plates (31, 32) fixed to each other with the first hub flange (21) and the second hub flange (22) therebetween, wherein the two side plates (31, 32) are capable of rotating in a predetermined extent in the circumferential direction (C) relative to the first hub flange (21) and the second hub flange (22), and the two side plates (31, 32) form main damping spring mounting portions;
a plurality of main damping springs (4) distributed along the circumferential direction (C) and respectively accommodated in the corresponding main damping spring mounting portions, wherein a first main damping spring (41) of the plurality of main damping springs (4) is mounted in the first through-hole (21h), and a second main damping spring (42) of the plurality of main damping springs (4) is mounted in the second through-hole (22h1), so that when the vibration damper is operated, a relative rotation angle of the first hub flange (21) relative to the second hub flange (22) is equal to the sum of a relative rotation angle of the first hub flange (21) relative to the two side plates (31, 32) and a relative rotation angle of the two side plates (31, 32) relative to the second hub flange (22);
a third hub flange (82) fixed to the flywheel mass (1) and located radially inside of the first hub flange (21), wherein the third hub flange (82) is capable of rotating in a predetermined extent in the circumferential direction (C) relative to the first hub flange (21), and the third hub flange (82) abuts against the first hub flange (21) through rotation; and
a plurality of pre-damping springs (9) distributed along the circumferential direction (C) and located between the third hub flange (82) and the first hub flange (21) in the circumferential direction (C), such that during the rotation of the third hub flange (82) relative to the first hub flange (21), the plurality of pre-damping springs (9) are compressed to implement damping.

3. The vibration damper for the vehicle according to claim 1 or 2, wherein a length of the first through-hole (21h1) is roughly equal to a length of the first main damping spring (41), and a length of the second through-hole (22h1) is roughly equal to a length of the second main damping spring (42).

4. The vibration damper for the vehicle according to any one of claims 1 to 3, wherein
the first hub flange (21) is further formed with a third through-hole corresponding to the second through-hole (22h1) and passing through the first hub flange (21) in the axial direction (A), and a length of the third through-hole is greater than the length of the second main damping spring (42) and the length of the second through-hole (22h1); and/or
the second hub flange (22) is further formed with a fourth through-hole (22h2) corresponding to the first through-hole (21h) and passing through the second hub flange (22) in the axial direction (A), and a length of the fourth through-hole (22h2) is greater than the length of the first main damping spring (41) and the length of the first through-hole (21h).

5. The vibration damper for the vehicle according to claim 4, wherein
the vibration damper for the vehicle further comprises a centrifugal pendulum unit disposed on the first hub flange (21), and the centrifugal pendulum unit is located radially outside or radially inside of the first through-hole (21h) and the third through-hole; and/or
the vibration damper for the vehicle further comprises a centrifugal pendulum unit (7) disposed on the second hub flange (22), and the centrifugal pendulum unit (7) is located radially outside or radially inside of the second through-hole (22h1) and the fourth through-hole (22h2).

6. The vibration damper for the vehicle according to any one of claims 1 to 5, wherein
the first hub flange (21) comprises a cutaway area avoiding the second main damping spring (42); and/or
the second hub flange (22) comprises a cutaway area avoiding the first main damping spring (41).

7. The vibration damper for the vehicle according to any one of claims 1 to 6, wherein each the main damping spring mounting portion comprises windows (31h, 32h) corresponding to the main damping springs (4) and passing through the side plates (31, 32) in the axial direction (A), lengths of the windows (31h, 32h) are roughly equal to lengths of the corresponding main damping springs (4), such that locations of the corresponding main damping springs (4) can be defined by peripheries of the windows (31h, 32h), and
a plurality of the main damping spring mounting portions are evenly distributed or unevenly distributed in the circumferential direction (C).

8. The vibration damper for the vehicle according to any one of claims 1 and 3 to 7, wherein
the two side plates (31, 32) comprise a first side plate (31) located on one axial side of the first hub flange (21) and a second side plate (32) located on the other axial side of the second hub flange (22), and
the vibration damper for the vehicle further comprises at least one side friction disc (52, 53) disposed between the second side plate (32) and the second hub flange (22) with the hub core (81), and at least one central friction disc (54) disposed between the first hub flange (21) and the second hub flange (22) with the hub core (81), wherein the at least one side friction disc (52, 53) and the at least one central friction disc (54) limit the pre-damping springs (9) in the axial direction (A).

9. The vibration damper for the vehicle according to any one of claims 2 and 3 to 7, wherein
the two side plates (31, 32) comprise a first side plate (31) located on one axial side of the first hub flange (21) and a second side plate (32) located on the other axial side of the second hub flange (22), and
the vibration damper for the vehicle further comprises at least one side friction disc (55, 56) disposed between the first side plate (31) and the first hub flange (21) with the third hub flange (82), and at least one central friction disc (54) disposed between the first hub flange (21) with the third hub flange (82) and the second hub flange (22), wherein the at least one side friction disc (55, 56) and the at least one central friction disc (54) limit the pre-damping springs (9) in the axial direction (A).

10. A vehicle comprising the vibration damper for the vehicle according to any one of claims 1 to 9.

## Patentansprüche

1. Schwingungsdämpfer für ein Fahrzeug, umfassend:
eine Schwungmasse (1) zur Übertragungsverbindung mit einer Motorkurbelwelle (CS) des Fahrzeugs;
einen ersten Nabenflansch (21), der an der Schwungmasse (1) befestigt und mit einem ersten Durchgangsloch (21h) ausgebildet ist, das in einer axialen Richtung (A) des Schwingungsdämpfers für das Fahrzeug hindurchgeht;
einen zweiten Nabenflansch (22) zur Übertragungsverbindung mit einer Eingangswelle eines Getriebes des Fahrzeugs, der in der Lage ist, sich in einem vorbestimmten Ausmaß in einer Umfangsrichtung (C) des Schwingungsdämpfers für das Fahrzeug relativ zu dem ersten Nabenflansch (21) zu drehen, wobei der zweite Nabenflansch (22) mit einem zweiten Durchgangsloch (22h1) ausgebildet ist, das in der axialen Richtung (A) hindurchgeht, und das zweite Durchgangsloch (22h1) und das erste Durchgangsloch (21h) in der Umfangsrichtung (C) versetzt sind;
zwei Seitenplatten (31, 32), die mit dem ersten Nabenflansch (21) und dem zweiten Nabenflansch (22) dazwischen aneinander befestigt sind, wobei die beiden Seitenplatten (31, 32) in der Lage sind, sich in einem vorbestimmten Ausmaß in der Umfangsrichtung (C) relativ zu dem ersten Nabenflansch (21) und dem zweiten Nabenflansch (22) zu drehen, und die beiden Seitenplatten (31, 32) Montageabschnitte für die Hauptdämpfungsfedern bilden;
eine Vielzahl von Hauptdämpfungsfedern (4), die entlang der Umfangsrichtung (C) verteilt und jeweils in den entsprechenden Montageabschnitten für die Hauptdämpfungsfedern untergebracht sind, wobei eine erste Hauptdämpfungsfeder (41) der Vielzahl von Hauptdämpfungsfedern (4) in dem ersten Durchgangsloch (21h) montiert ist und eine zweite Hauptdämpfungsfeder (42) der Vielzahl von Hauptdämpfungsfedern (4) in dem zweiten Durchgangsloch (22h 1) montiert ist, sodass, wenn der Schwingungsdämpfer betätigt wird, ein relativer Drehwinkel des ersten Nabenflansches (21) relativ zu dem zweiten Nabenflansch (22) gleich der Summe eines relativen Drehwinkels des ersten Nabenflansches (21) relativ zu den beiden Seitenplatten (31, 32) und eines relativen Drehwinkels der beiden Seitenplatten (31, 32) relativ zu dem zweiten Nabenflansch (22) ist;
einen Nabenkern (81), der radial innerhalb des zweiten Nabenflansches (22) befindlich ist, wobei der zweite Nabenflansch (22) in der Lage ist, sich in einem vorbestimmten Ausmaß in der Umfangsrichtung (C) relativ zu dem Nabenkern (81) zu drehen, und der zweite Nabenflansch (22) durch Drehung an dem Nabenkern (81) anstößt; und
eine Vielzahl von Vordämpfungsfedern (9), die entlang der Umfangsrichtung (C) verteilt und zwischen dem Nabenkern (81) und dem zweiten Nabenflansch (22) in der Umfangsrichtung (C) befindlich sind, sodass während der Drehung des zweiten Nabenflansches (22) relativ zu dem Nabenkern (81) die Vielzahl von Vordämpfungsfedern (9) zusammengedrückt werden, um eine Dämpfung zu bewirken.

2. Schwingungsdämpfer für ein Fahrzeug, umfassend:
eine Schwungmasse (1) zur Übertragungsverbindung mit einer Motorkurbelwelle (CS) des Fahrzeugs;
einen ersten Nabenflansch (21), der in Übertragungsverbindung mit der Schwungmasse (1) steht und mit einem ersten Durchgangsloch (21h) ausgebildet ist, das in einer axialen Richtung (A) des Schwingungsdämpfers für das Fahrzeug hindurchgeht;
einen zweiten Nabenflansch (22) zur Übertragungsverbindung mit einer Eingangswelle eines Getriebes des Fahrzeugs, der in der Lage ist, sich in einem vorbestimmten Ausmaß in einer Umfangsrichtung (C) des Schwingungsdämpfers für das Fahrzeug relativ zu dem ersten Nabenflansch (21) zu drehen, wobei der zweite Nabenflansch (22) mit einem zweiten Durchgangsloch (22h1) ausgebildet ist, das in der axialen Richtung (A) hindurchgeht, und das zweite Durchgangsloch (22h1) und das erste Durchgangsloch (21h) in der Umfangsrichtung (C) versetzt sind;
zwei Seitenplatten (31, 32), die mit dem ersten Nabenflansch (21) und dem zweiten Nabenflansch (22) dazwischen aneinander befestigt sind, wobei die beiden Seitenplatten (31, 32) in der Lage sind, sich in einem vorbestimmten Ausmaß in der Umfangsrichtung (C) relativ zu dem ersten Nabenflansch (21) und dem zweiten Nabenflansch (22) zu drehen, und die beiden Seitenplatten (31, 32) Montageabschnitte für die Hauptdämpfungsfedern bilden;
eine Vielzahl von Hauptdämpfungsfedern (4), die entlang der Umfangsrichtung (C) verteilt und jeweils in den entsprechenden Montageabschnitten für die Hauptdämpfungsfedern untergebracht sind, wobei eine erste Hauptdämpfungsfeder (41) der Vielzahl von Hauptdämpfungsfedern (4) in dem ersten Durchgangsloch (21h) montiert ist und eine zweite Hauptdämpfungsfeder (42) der Vielzahl von Hauptdämpfungsfedern (4) in dem zweiten Durchgangsloch (22h 1) montiert ist, sodass, wenn der Schwingungsdämpfer betätigt wird, ein relativer Drehwinkel des ersten Nabenflansches (21) relativ zu dem zweiten Nabenflansch (22) gleich der Summe eines relativen Drehwinkels des ersten Nabenflansches (21) relativ zu den beiden Seitenplatten (31, 32) und eines relativen Drehwinkels der beiden Seitenplatten (31, 32) relativ zu dem zweiten Nabenflansch (22) ist;
einen dritten Nabenflansch (82), der an der Schwungmasse (1) befestigt und radial innerhalb des ersten Nabenflansches (21) befindlich ist, wobei der dritte Nabenflansch (82) in der Lage ist, sich in einem vorbestimmten Ausmaß in der Umfangsrichtung (C) relativ zu dem ersten Nabenflansch (21) zu drehen, und der dritte Nabenflansch (82) durch Drehung an dem ersten Nabenflansch (21) anstößt; und
eine Vielzahl von Vordämpfungsfedern (9), die entlang der Umfangsrichtung (C) verteilt und zwischen dem dritten Nabenflansch (82) und dem ersten Nabenflansch (21) in der Umfangsrichtung (C) befindlich sind, sodass während der Drehung des dritten Nabenflansches (82) relativ zu dem ersten Nabenflansch (21) die Vielzahl von Vordämpfungsfedern (9) zusammengedrückt werden, um eine Dämpfung zu bewirken.

3. Schwingungsdämpfer für das Fahrzeug nach Anspruch 1 oder 2, wobei eine Länge des ersten Durchgangslochs (21h1) ungefähr gleich einer Länge der ersten Hauptdämpfungsfeder (41) ist und eine Länge des zweiten Durchgangslochs (22h1) ungefähr gleich einer Länge der zweiten Hauptdämpfungsfeder (42) ist.

4. Schwingungsdämpfer für das Fahrzeug nach einem der Ansprüche 1 bis 3, wobei
der erste Nabenflansch (21) ferner mit einem dritten Durchgangsloch ausgebildet ist, das dem zweiten Durchgangsloch (22h1) entspricht und in der axialen Richtung (A) durch den ersten Nabenflansch (21) hindurchgeht, und eine Länge des dritten Durchgangslochs größer ist als die Länge der zweiten Hauptdämpfungsfeder (42) und die Länge des zweiten Durchgangslochs (22h1); und/oder
der zweite Nabenflansch (22) ferner mit einem vierten Durchgangsloch (22h2) ausgebildet ist, das dem ersten Durchgangsloch (21h) entspricht und in der axialen Richtung (A) durch den zweiten Nabenflansch (22) hindurchgeht, und eine Länge des vierten Durchgangslochs (22h2) größer ist als die Länge der ersten Hauptdämpfungsfeder (41) und die Länge des ersten Durchgangslochs (21h).

5. Schwingungsdämpfer für das Fahrzeug nach Anspruch 4, wobei
der Schwingungsdämpfer für das Fahrzeug ferner eine Fliehkraftpendeleinheit umfasst, die an dem ersten Nabenflansch (21) angeordnet ist, und die Fliehkraftpendeleinheit radial außerhalb oder radial innerhalb des ersten Durchgangslochs (21h) und des dritten Durchgangslochs befindlich ist; und/oder
der Schwingungsdämpfer für das Fahrzeug ferner eine Fliehkraftpendeleinheit (7) umfasst, die an dem zweiten Nabenflansch (22) angeordnet ist, und die Fliehkraftpendeleinheit (7) radial außerhalb oder radial innerhalb des zweiten Durchgangslochs (22h1) und des vierten Durchgangslochs (22h2) befindlich ist.

6. Schwingungsdämpfer für das Fahrzeug nach einem der Ansprüche 1 bis 5, wobei
der erste Nabenflansch (21) einen ausgeschnittenen Bereich umfasst, der die zweite Hauptdämpfungsfeder (42) umgeht; und/oder
der zweite Nabenflansch (22) einen ausgeschnittenen Bereich umfasst, der die erste Hauptdämpfungsfeder (41) umgeht.

7. Schwingungsdämpfer für das Fahrzeug nach einem der Ansprüche 1 bis 6, wobei jeder Montageabschnitt für die Hauptdämpfungsfedern Fenster (31h, 32h) umfasst, die den Hauptdämpfungsfedern (4) entsprechen und in der axialen Richtung (A) durch die Seitenplatten (31, 32) hindurchgehen, wobei die Längen der Fenster (31h, 32h) ungefähr gleich den Längen der entsprechenden Hauptdämpfungsfedern (4) sind, sodass die Positionen der entsprechenden Hauptdämpfungsfedern (4) durch die Umfänge der Fenster (31h, 32h) definiert werden können, und
eine Vielzahl der Montageabschnitte für die Hauptdämpfungsfedern gleichmäßig oder ungleichmäßig in der Umfangsrichtung (C) verteilt sind.

8. Schwingungsdämpfer für das Fahrzeug nach einem der Ansprüche 1 und 3 bis 7, wobei
die beiden Seitenplatten (31, 32) eine erste Seitenplatte (31), die auf einer axialen Seite des ersten Nabenflansches (21) befindlich ist, und eine zweite Seitenplatte (32), die auf der anderen axialen Seite des zweiten Nabenflansches (22) befindlich ist, umfassen, und
der Schwingungsdämpfer für das Fahrzeug ferner mindestens eine zwischen der zweiten Seitenplatte (32) und dem zweiten Nabenflansch (22) mit dem Nabenkern angeordnete seitliche Reibscheibe (52, 53) und mindestens eine zwischen dem ersten Nabenflansch (21) und dem zweiten Nabenflansch (22) mit dem Nabenkern (81) angeordnete zentrale Reibscheibe (54) umfasst, wobei die mindestens eine seitliche Reibscheibe (52, 53) und die mindestens eine zentrale Reibscheibe (54) die Vordämpfungsfedern (9) in der axialen Richtung (A) begrenzen.

9. Schwingungsdämpfer für das Fahrzeug nach einem der Ansprüche 2 und 3 bis 7, wobei
die beiden Seitenplatten (31, 32) eine erste Seitenplatte (31), die auf einer axialen Seite des ersten Nabenflansches (21) befindlich ist, und eine zweite Seitenplatte (32), die auf der anderen axialen Seite des zweiten Nabenflansches (22) befindlich ist, umfassen, und
der Schwingungsdämpfer für das Fahrzeug ferner mindestens eine zwischen der ersten Seitenplatte (31) und dem ersten Nabenflansch (21) mit dem dritten Nabenflansch (82) angeordnete seitliche Reibscheibe (55, 56) und mindestens eine zwischen dem ersten Nabenflansch (21) mit dem dritten Nabenflansch (82) und dem zweiten Nabenflansch (22) angeordnete zentrale Reibscheibe (54) umfasst, wobei die mindestens eine seitliche Reibscheibe (55, 56) und die mindestens eine zentrale Reibscheibe (54) die Vordämpfungsfedern (9) in der axialen Richtung (A) begrenzen.

10. Fahrzeug, umfassend den Schwingungsdämpfer für das Fahrzeug nach einem der Ansprüche 1 bis 9.

## Revendications

1. Amortisseur de vibrations pour un véhicule, comprenant :
une masse de volant d'inertie (1) pour une liaison de transmission avec un vilebrequin de moteur (CS) du véhicule ;
un premier flasque de moyeu (21) fixé à la masse de volant d'inertie (1) et comprenant un premier trou traversant (21h) traversant dans une direction axiale (A) de l'amortisseur de vibrations pour le véhicule ;
un deuxième flasque de moyeu (22) pour une liaison de transmission avec un arbre d'entrée d'une transmission du véhicule et pouvant tourner dans une mesure prédéfinie dans une direction circonférentielle (C) de l'amortisseur de vibrations pour le véhicule par rapport au premier flasque de moyeu (21), le deuxième flasque de moyeu (22) comprenant un deuxième trou traversant (22h1) traversant dans la direction axiale (A), et le deuxième trou traversant (22h1) et le premier trou traversant (21h) étant décalés dans la direction circonférentielle (C) ;
deux plaques latérales (31, 32) fixées l'une à l'autre avec le premier flasque de moyeu (21) et le deuxième flasque de moyeu (22) entre elles, les deux plaques latérales (31, 32) pouvant tourner dans une mesure prédéfinie dans la direction circonférentielle (C) par rapport au premier flasque de moyeu (21) et au deuxième flasque de moyeu (22), et les deux plaques latérales (31, 32) formant des parties de montage de ressort d'amortissement principal ;
une pluralité de ressorts d'amortissement principaux (4) répartis le long de la direction circonférentielle (C) et logés respectivement dans les parties de montage de ressort d'amortissement principal correspondantes, un premier ressort d'amortissement principal (41) de la pluralité de ressorts d'amortissement principaux (4) étant monté dans le premier trou traversant (21h), et un second ressort d'amortissement principal (42) de la pluralité de ressorts d'amortissement principaux (4) étant monté dans le deuxième trou traversant (22h1), de sorte que, lorsque l'amortisseur de vibrations est actionné, un angle de rotation relative du premier flasque de moyeu (21) par rapport au deuxième flasque de moyeu (22) est égal à la somme d'un angle de rotation relative du premier flasque de moyeu (21) par rapport aux deux plaques latérales (31, 32) et d'un angle de rotation relative des deux plaques latérales (31, 32) par rapport au deuxième flasque de moyeu (22) ;
un noyau de moyeu (81) situé radialement à l'intérieur du deuxième flasque de moyeu (22), le deuxième flasque de moyeu (22) pouvant tourner dans une mesure prédéfinie dans la direction circonférentielle (C) par rapport au noyau de moyeu (81), et le deuxième flasque de moyeu (22) venant en butée contre le noyau de moyeu (81) par rotation ; et
une pluralité de ressorts de pré-amortissement (9) répartis le long de la direction circonférentielle (C) et situés entre le noyau de moyeu (81) et le deuxième flasque de moyeu (22) dans la direction circonférentielle (C), de sorte que, pendant la rotation du deuxième flasque de moyeu (22) par rapport au noyau de moyeu (81), la pluralité de ressorts de pré-amortissement (9) sont comprimés pour mettre en oeuvre l'amortissement.

2. Amortisseur de vibrations pour un véhicule, comprenant :
une masse de volant d'inertie (1) pour une liaison de transmission avec un vilebrequin de moteur (CS) du véhicule ;
un premier flasque de moyeu (21) en liaison de transmission avec la masse de volant d'inertie (1) et comprenant un premier trou traversant (21h) traversant dans une direction axiale (A) de l'amortisseur de vibrations pour le véhicule ;
un deuxième flasque de moyeu (22) pour une liaison de transmission avec un arbre d'entrée d'une transmission du véhicule et pouvant tourner dans une mesure prédéfinie dans une direction circonférentielle (C) de l'amortisseur de vibrations pour le véhicule par rapport au premier flasque de moyeu (21), le deuxième flasque de moyeu (22) comprenant un deuxième trou traversant (22h1) traversant dans la direction axiale (A), et le deuxième trou traversant (22h1) et le premier trou traversant (21h) étant décalés dans la direction circonférentielle (C) ;
deux plaques latérales (31, 32) fixées l'une à l'autre avec le premier flasque de moyeu (21) et le deuxième flasque de moyeu (22) entre elles, les deux plaques latérales (31, 32) pouvant tourner dans une mesure prédéfinie dans la direction circonférentielle (C) par rapport au premier flasque de moyeu (21) et au deuxième flasque de moyeu (22), et les deux plaques latérales (31, 32) formant des parties de montage de ressort d'amortissement principal ;
une pluralité de ressorts d'amortissement principaux (4) répartis le long de la direction circonférentielle (C) et logés respectivement dans les parties de montage de ressort d'amortissement principal correspondantes, un premier ressort d'amortissement principal (41) de la pluralité de ressorts d'amortissement principaux (4) étant monté dans le premier trou traversant (21h), et un second ressort d'amortissement principal (42) de la pluralité de ressorts d'amortissement principaux (4) étant monté dans le deuxième trou traversant (22h1), de sorte que, lorsque l'amortisseur de vibrations est actionné, un angle de rotation relative du premier flasque de moyeu (21) par rapport au deuxième flasque de moyeu (22) est égal à la somme d'un angle de rotation relative du premier flasque de moyeu (21) par rapport aux deux plaques latérales (31, 32) et d'un angle de rotation relative des deux plaques latérales (31, 32) par rapport au deuxième flasque de moyeu (22) ;
un troisième flasque de moyeu (82) fixé à la masse de volant d'inertie (1) et situé radialement à l'intérieur du premier flasque de moyeu (21), le troisième flasque de moyeu (82) pouvant tourner dans une mesure prédéfinie dans la direction circonférentielle (C) par rapport au premier flasque de moyeu (21), et le troisième flasque de moyeu (82) venant en butée contre le premier flasque de moyeu (21) par rotation ; et
une pluralité de ressorts de pré-amortissement (9) répartis le long de la direction circonférentielle (C) et situés entre le troisième flasque de moyeu (82) et le premier flasque de moyeu (21) dans la direction circonférentielle (C), de sorte que, pendant la rotation du troisième flasque de moyeu (82) par rapport au premier flasque de moyeu (21), la pluralité de ressorts de pré-amortissement (9) sont comprimés pour mettre en oeuvre l'amortissement.

3. Amortisseur de vibrations pour le véhicule selon la revendication 1 ou 2, dans lequel une longueur du premier trou traversant (21h1) est approximativement égale à une longueur du premier ressort d'amortissement principal (41), et une longueur du deuxième trou traversant (22h1) est approximativement égale à une longueur du second ressort d'amortissement principal (42).

4. Amortisseur de vibrations pour le véhicule selon l'une quelconque des revendications 1 à 3, dans lequel
le premier flasque de moyeu (21) comprend en outre un troisième trou traversant correspondant au deuxième trou traversant (22h1) et traversant le premier flasque de moyeu (21) dans la direction axiale (A), et une longueur du troisième trou traversant est supérieure à la longueur du second ressort d'amortissement principal (42) et à la longueur du deuxième trou traversant (22h1) ; et/ou
le deuxième flasque de moyeu (22) comprend en outre un quatrième trou traversant (22h2) correspondant au premier trou traversant (21h) et traversant le deuxième flasque de moyeu (22) dans la direction axiale (A), et une longueur du quatrième trou traversant (22h2) est supérieure à la longueur du premier ressort d'amortissement principal (41) et à la longueur du premier trou traversant (21h).

5. Amortisseur de vibrations pour le véhicule selon la revendication 4, dans lequel
l'amortisseur de vibrations pour le véhicule comprend en outre une unité pendule centrifuge disposée sur le premier flasque de moyeu (21), et l'unité pendule centrifuge est située radialement à l'extérieur ou radialement à l'intérieur du premier trou traversant (21h) et du troisième trou traversant ; et/ou
l'amortisseur de vibrations pour le véhicule comprend en outre une unité pendule centrifuge (7) disposée sur le deuxième flasque de moyeu (22), et l'unité pendule centrifuge (7) est située radialement à l'extérieur ou radialement à l'intérieur du deuxième trou traversant (22h1) et du quatrième trou traversant (22h2).

6. Amortisseur de vibrations pour le véhicule selon l'une quelconque des revendications 1 à 5, dans lequel
le premier flasque de moyeu (21) comprend une zone découpée évitant le second ressort d'amortissement principal (42) ; et/ou
le deuxième flasque de moyeu (22) comprend une zone découpée évitant le premier ressort d'amortissement principal (41).

7. Amortisseur de vibrations pour le véhicule selon l'une quelconque des revendications 1 à 6, dans lequel chaque partie de montage de ressort d'amortissement principal comprend des fenêtres (31h, 32h) correspondant aux ressorts d'amortissement principaux (4) et traversant les plaques latérales (31, 32) dans la direction axiale (A), les longueurs des fenêtres (31h, 32h) sont approximativement égales aux longueurs des ressorts d'amortissement principaux (4) correspondants, de sorte que les emplacements des ressorts d'amortissement principaux (4) correspondants peuvent être définis par les périphéries des fenêtres (31h, 32h), et
une pluralité des parties de montage de ressort d'amortissement principal sont uniformément réparties ou inégalement réparties dans la direction circonférentielle (C).

8. Amortisseur de vibrations pour le véhicule selon l'une quelconque des revendications 1 et 3 à 7, dans lequel
les deux plaques latérales (31, 32) comprennent une première plaque latérale (31) située sur un côté axial du premier flasque de moyeu (21) et une seconde plaque latérale (32) située sur l'autre côté axial du deuxième flasque de moyeu (22), et
l'amortisseur de vibrations pour le véhicule comprend en outre au moins un disque de friction latéral (52, 53) disposé entre la seconde plaque latérale (32) et le deuxième flasque de moyeu (22) avec le noyau de moyeu, et au moins un disque de friction central (54) disposé entre le premier flasque de moyeu (21) et le deuxième flasque de moyeu (22) avec le noyau de moyeu (81), l'au moins un disque de friction latéral (52, 53) et l'au moins un disque de friction central (54) limitant les ressorts de pré-amortissement (9) dans la direction axiale (A).

9. Amortisseur de vibrations pour le véhicule selon l'une quelconque des revendications 2 et 3 à 7, dans lequel
les deux plaques latérales (31, 32) comprennent une première plaque latérale (31) située sur un côté axial du premier flasque de moyeu (21) et une seconde plaque latérale (32) située sur l'autre côté axial du deuxième flasque de moyeu (22), et
l'amortisseur de vibrations pour le véhicule comprend en outre au moins un disque de friction latéral (55, 56) disposé entre la première plaque latérale (31) et le premier flasque de moyeu (21) avec le troisième flasque de moyeu (82), et au moins un disque de friction central (54) disposé entre le premier flasque de moyeu (21) avec le troisième flasque de moyeu (82) et le deuxième flasque de moyeu (22), l'au moins un disque de friction latéral (55, 56) et l'au moins un disque de friction central (54) limitant les ressorts de pré-amortissement (9) dans la direction axiale (A).

10. Véhicule comprenant l'amortisseur de vibrations pour le véhicule selon l'une quelconque des revendications 1 à 9.
